# EUROPÄISCHE PATENTSCHRIFT

(11) **EP 2 788 721 B1**
(45) Veröffentlichungstag und Bekanntmachung des Hinweises auf die Patenterteilung: **03.05.2017**
(21) Anmeldenummer: 12791778.9
(22) Anmeldetag: 29.11.2012
(51) Int. Cl.: G01C 21/34, B60L 11/12, G06Q 10/10, B60L 3/12, G01C 21/36, B60L 11/18

(54) **VERFAHREN UND VORRICHTUNG ZUM BEREITSTELLEN EINES ELEKTRONISCHEN TERMINPLANERS FÜR EIN FAHRZEUG**
METHOD AND DEVICE FOR PROVIDING AN ELECTRONIC ORGANIZER FOR A VEHICLE
MÉTHODE ET DISPOSITIF POUR FOURNIR UN AGENDA ÉLECTRONIQUE POUR UN VÉHICULE

(30) Priorität: 06.12.2011 DE 102011120159; 12.06.2012 DE 102012011605
(43) Veröffentlichungstag der Anmeldung: 15.10.2014
(73) Patentinhaber: Volkswagen Aktiengesellschaft, 38440 Wolfsburg (DE)
(72) Erfinder: HOCH, Nicklas, 30559 Hannover (DE); WERTHER, Bernd, 38170 Klein Vahlberg (DE); MISCHKE, Michael, 30167 Hannover (DE)
(86) Internationale Anmeldenummer: PCT/EP2012/073911
(87) Internationale Veröffentlichungsnummer: WO 2013/083465

(56) Entgegenhaltungen:
- EP-A1- 1 909 069
- EP-A2- 1 975 562
- DE-C1- 19 519 107
- US-A- 5 892 346

## Beschreibung

Die vorliegende Erfindung betrifft ein Verfahren zum Bereitstellen eines elektronischen Terminplaners für ein Fahrzeug auf der Basis von erfassten Randbedingungen. Diese Randbedingungen umfassen Termine, denen Zeitdaten und geographische Positionen zugeordnet sind. Sie umfassen des Weiteren die zum Antrieb des Fahrzeugs verfügbare Rest-Energiemenge sowie Daten zu einem geographischen Wegenetz inklusive geographischen Positionen von für das Fahrzeug geeigneten Energieversorgungseinrichtungen. Die vorliegende Erfindung betrifft des Weiteren eine dazugehörige Vorrichtung.

Für den Nutzer eines Fahrzeugs stellt sich häufig das Problem, dass er innerhalb eines bestimmten Zeitraums verschiedene Termine an verschiedenen Orten wahrnehmen muss. Die Termine und die Routenplanung zum Wahrnehmen der Termine müssen dabei so aufeinander abgestimmt sein, dass der Nutzer mit dem Fahrzeug die Orte, bei denen die Termine stattfinden, rechtzeitig erreicht. Dabei ist zu berücksichtigen, dass von Zeit zu Zeit der Energiespeicher des Fahrzeugs wieder aufgefüllt werden muss. Die Erreichbarkeit geeigneter Energieversorgungseinrichtungen sowie die Zeit der Energieauffüllung muss in der Routenplanung und der Zeitplanung berücksichtigt werden.

Die DE 10 2008 030 563 A1 beschreibt beispielsweise ein Kraftfahrzeug mit einer Vorrichtung zur Ermittlung der Rest-Reichweite und einem Navigationssystem, mittels derer der Fahrer des Fahrzeugs über diejenigen Ziele informiert werden kann, die er mit dem Energieinhalt des Energiespeichers des Fahrzeugs erreichen und von denen er ohne Auffüllen des Energiespeichers zum Ausgangspunkt zurückkehren kann.

Die US 5 892 346 offenbart die Verwendung eines Terminkalenders zur Routenbestimmung samt Erstellen eines Aufladeplans für ein elektrisch betriebenes Fahrzeug.

Insbesondere bei elektrisch angetriebenen Fahrzeugen besteht ein Bedürfnis, das Wiederaufladen der Batterie möglichst gut in die Reiseroutenplanung einzubeziehen. Einerseits ist die Reichweite eines Elektrofahrzeugs üblicherweise wesentlich geringer als die Reichweite eines mittels eines Kraftstoffs angetriebenen Fahrzeugs, andererseits sind die zum Aufladen der Fahrzeugbatterie geeigneten Ladestationen derzeit noch wesentlich weitmaschiger als Kraftstofftankstellen verteilt und der Aufladevorgang der Batterie dauert länger als ein Betanken des Fahrzeugs mit Kraftstoff.

Die DE 10 2010 039 075 A1 beschreibt ein Energiemanagementsystem für ein Elektrofahrzeug bei dem für eine Navigationsroute zu einem Abfahrpunkt und einem Zielpunkt die erforderliche Energiemenge mit der verbleibenden Energiemenge verglichen wird. Falls die verbleibende Energiemenge nicht ausreicht, wird eine Mangelinformation ausgegeben. Ferner können für die Navigationsroute Ladestationen gesucht und angezeigt werden, für die auch Reservierungen getätigt werden können.

Die DE 195 19 107 C1 beschreibt eine Fahrtroutenratgebereinrichtung, insbesondere für Elektrofahrzeuge. Dazu wird unter Einbeziehung von eventuell während der Fahrt erforderlichen Zwischenaufenthalten zur Energieeinspeisung eine Fahrtroute bestimmt und im Fahrzeug angezeigt.

Die US 8 054 038 B2 beschreibt ein Verfahren und eine Vorrichtung zum Optimieren des Ladezustands einer Batterie eines Elektro-Fahrzeugs. Zu einer vorgegebenen Routenplanung mit einem Zielort oder mehreren Zielorten und gegebenenfalls weiteren Randbedingungen wie z.B. den Straßen- und Wetterbedingungen und einer Vorgabe bzgl. einer Sicherheitsmarge im Ladezustand werden die Aufladebedingungen der Batterie an den jeweiligen Zielorten ermittelt und angezeigt. Die Routenplanung kann im Fahrzeug über einen Touchscreen eingegeben werden.

Es ist die Aufgabe der vorliegenden Erfindung, ein Verfahren und eine Vorrichtung zum Bereitstellen eines elektronischen Terminplaners für ein Fahrzeug der eingangs genannten Art anzugeben, welche dem Nutzer eine schnelle und intuitiv verständliche Übersicht der impliziten Zusammenhänge einer Terminsequenz bereitstellt und auch eine Veränderung des Terminplans in einfacher Weise erlaubt.

Diese Aufgabe wird erfindungsgemäß durch ein Verfahren mit den Merkmalen des Anspruchs 1 sowie durch eine Vorrichtung mit den Merkmalen des Anspruchs 10 gelöst. Vorteilhafte Aus- und Weiterbildungen ergeben sich aus den abhängigen Ansprüchen.

Bei dem erfindungsgemäßen Verfahren zum Bereitstellen eines elektronischen Terminplaners für ein Fahrzeug werden Termine, denen Zeitdaten und geographischen Positionen zugeordnet sind, erfasst, es wird die zum Antrieb des Fahrzeugs verfügbare Rest-Energiemenge erfasst und es werden Daten zu einem geographischen Wegenetz inklusive geographischen Positionen von für das Fahrzeug geeigneten Energieversorgungseinrichtungen erfasst. Unter Berücksichtigung von den Zeitdaten und geographischen Positionen, die den Terminen zugeordnet sind, und unter Berücksichtigung der verfügbaren Rest-Energiemenge und des Energieverbrauchs des Fahrzeugs auf einer potentiell zu fahrenden Route werden ein Routenplan und ein Energieauffüllplan erzeugt, wobei mit den Terminen assoziierte Zusatzzeiträume berechnet werden, welche sich aufgrund des Routenplans und des Energieauffüllplans ergeben. Daraus wird ein Terminplan mit den Terminen und den mit den Terminen assoziierten Zusatzzeiträumen erzeugt und ausgegeben, z.B. auf einer Anzeigefläche angezeigt. Die Darstellung von diesen Zusatzzeiträumen, die zum Ermöglichen des Terminplan notwendig sind, unterstützt den Nutzer des Terminplan, im Regelfall der Fahrer des Fahrzeugs selbst, die Voraussetzungen des Terminplans besser zu verstehen. Die Zusatzzeiträume können dabei derart visualisiert werden, dass dem Nutzer die Zusammenhänge zwischen den Terminen einerseits und dem dazu notwendigen Routenplan und Energieauffüllplan andererseits intuitiv verständlich wird.

Die Erfassung der Termine erfolgt auf an sich bekannte Art. Die Termine werden beispielsweise direkt im Fahrzeug eingegeben. Alternativ oder auch zusätzlich werden die Termine durch Synchronisieren mit einem externen Terminkalender, beispielsweise dem elektronisch gespeicherten Terminkalender in einem tragbaren Kleincomputer des Fahrers des Fahrzeugs, oder über eine Funkverbindung von einem außerhalb des Fahrzeugs befindlichen Gerät empfangen. Es wird beispielsweise eine Kurznachricht oder E-Mail mit einer Besprechungsanfrage von einer dritten Person empfangen.

Die Erfassung des geographischen Wegenetzes erfolgt ebenfalls auf an sich bekannte Art. Es wird insbesondere eine digitale Straßenkarte aus einer Datenbank in einem im Fahrzeug angeordneten Navigationsgerät ausgelesen. Alternativ oder auch zusätzlich können Informationen über andere Verkehrsteilnehmer oder ortsfeste Einrichtungen erfasst werden. Insbesondere können auf diese Weise aktuelle Informationen zu einzelnen Energieversorgungseinrichtungen, z.B. bezüglich deren Verfügbarkeit, erfasst und ggf. Buchungsanfragen versendet werden.

Es können auch weitere Parameter als Randbedingungen für die Erzeugung des Terminplans erfasst werden. Je nach Ausführungsform werden beispielsweise konfigurierbare Nutzerprofile bereitgestellt, in denen Sicherheitsmargen im Zeitplan oder im Ladungszustand eingestellt werden können. Je nach Nutzerpräferenz werden unter Berücksichtigung der Zusatzzeiten z.B. Zeitmargen zwischen zwei Terminen eingestellt, die der Nutzer für unvorhergesehene Vorkommnisse und allgemeine Bedürfnisse wie Pausenzeiten reserviert. Eine Sicherheitsmarge im Ladungszustand kann beispielsweise manuell vorkonfiguriert werden, um ein Absinken der Leistung bei Kälte und/oder bei Einschalten anderer Verbraucher vor Fahrtbeginn, z.B. einer Standheizung, zu berücksichtigen.

Das erfindungsgemäße Verfahren lässt sich prinzipiell für jede Fahrzeugart verwenden. Insbesondere richtet sich die Verwendung auf Fahrzeugtypen, bei denen das Auffüllen der Energiereserven aufgrund eines nicht hinreichend dichten und flächendeckenden Energieversorgungsnetzes im Vorfeld zu beachten ist und/oder das Energieauffüllen an sich einen signifikanten Zeitanteil benötigt. Eine besonders vorteilhafte Anwendung ergibt sich demnach, wenn das Fahrzeug elektrisch antreibbar ist und die geeigneten Energieversorgungseinrichtungen elektrische Ladestellen umfassen. Die Reichweiten elektrisch angetriebener Fahrzeuge sind, sofern sie nicht zusätzlich über einen Verbrennungsmotor verfügen, derzeit noch relativ gering und der Aufladevorgang nimmt deutlich mehr Zeit in Anspruch als das Betanken mit einem flüssigen oder gasförmigen Kraftstoff.

Weil Ladestellen derzeit rar sind, ist die Belegung einer Ladestelle größeren zeitlichen Schwankungen als Kraftstofftankstellen unterworfen. Dies kann mitunter zu unvorhergesehenen Wartezeiten an einer Ladestelle führen. Ferner sind solche Ladestellen noch wenig standardisiert, sodass auch die Ladezeit selber je nach Ladeleistung von der jeweiligen Ladestation abhängt. Daher ist vorteilhafterweise vorgesehen, dass die Eigenschaften der Ladestellen, insbesondere deren zeitliche Verfügbarkeit und die Ladeleistung, erfasst werden und bei der Erzeugung des Terminplans berücksichtigt werden. Falls sich mobile Ladestellen etablieren, beispielsweise in Form von Stromabnehmern als Infrastruktureinrichtung entlang von vielbefahrenen Strecken wie Autobahnen, ist dabei ggf. die Nutzbarkeit einer solchen Einrichtung und die Implikation auf die Fahrweise, z.B. eine Geschwindigkeitsbeschränkung, zu berücksichtigen.

Die Zusatzzeiträume im Terminplan liegen typischerweise zwischen jeweils zwei Terminen. Sie umfassen insbesondere Reisezeiten zwischen zwei Terminen unterschiedlicher geographischer Position, Wegezeiten zwischen einer Ladestation und einer einem Termin zugeordneten geographischen Position, Wartezeiten an einer Energieversorgungseinrichtung, insbesondere an einer Ladestation und/oder Energieauffüllzeiten, insbesondere Ladezeiten, an einer Energieversorgungseinrichtung. Die Zusatzzeiträume können sich dabei aber auch wenigstens teilweise mit anderen Zusatzzeiträumen oder einem der angrenzenden Termine überschneiden. So muss der Fahrer eines Elektrofahrzeugs das Fahrzeug zwar zunächst zum Aufladen der Batterie an der Ladestation abstellen und an diese anschließen, der Aufladevorgang kann dann aber, die Verfügbarkeit der Ladestation vorausgesetzt, gleichzeitig mit dem nachfolgenden Fußweg zum Termin und der Dauer des Termins erfolgen.

Je nach Ausführungsform des erfindungsgemäßen Verfahrens wird der Routenplan und/oder der Energieauffüllplan in Abhängigkeit unterschiedlicher Randbedingungen erzeugt. Diese Randbedingungen umfassen insbesondere die Topographie des geographischen Wegenetzes, den Verkehr, die Tageszeit, den Wochentag, die Jahreszeit, die Wetterbedingungen, den routenspezifischen Energieverbrauch, die Kosten, die Verfügbarkeit der Energieversorgungseinrichtung und/oder die Rest-Energiemenge des Fahrzeugs. Diese Randbedingungen beeinflussen sich ggf. untereinander. So hängt der routenspezifische Energieverbrauch vom Verkehr ab, wobei der Verkehr bereits bei der Auswahl der Route, d.h. beim Erstellen des Routenplans, zu berücksichtigen sein kann. Der Endzeitpunkt eines Termins und der Startzeitpunkt eines Folgetermins beeinflussen insbesondere die Frage, ob eine langsamere, energie- und kostensparende Route oder die schnellste Route für die Gesamtplanung des Terminplans vorteilhafter ist. Die Routenwahl hat somit auch einen Einfluss auf die im Fahrzeug verfügbare Rest-Energiemenge nach einem gefahrenen Routenabschnitt. Zweckmäßigerweise werden daher zunächst die unverrückbaren Randbedingungen z.B. die anfangs vorhandene Rest-Energiemenge, der betrachtete Zeitraum und die Wettervorhersage sowie die nutzerseitig vorgegebenen Terminvorgaben berücksichtigt und auf dieser Basis mögliche Alternativen zum Routenplan und Energieauffüllplan simuliert. Aus den möglichen Ergebnisse kann dann auf Basis eines Bewertungsmodells ein konkreter Terminplan ausgewählt und dem Nutzer vorgeschlagen werden.

Dabei wird ein Terminplan so gebildet, dass sich die Zeitdaten verschiedener Termine und die Zusatzzeiträume zeitlich nicht überlappen, um Terminkollisionen auszuschließen.

Erfindungsgemäß wird der erzeugte Terminplan mit den Terminen und den assoziierten Zusatzzeiträumen im Fahrzeug angezeigt, sodass der Nutzer, bzw. der Fahrer des Fahrzeugs diesen unmittelbar einsehen kann. Freie Zeiträume werden dem Nutzer zwischen der Menge der Termine und der Zusatzzeiträume als terminplanerischer Freiheitsgrad visualisiert, sodass er Wahlmöglichkeiten und Handlungsspielräume schnell erkennt.

Die Termine des Terminplans sind als solche veränderbar. Ihre Zeitdaten können verschoben werden oder der Termin kann als ganzes gestrichen werden. Die Veränderung des Terminplans erfolgt beispielsweise von außerhalb, indem eine neu oder aktualisierte Besprechungsanforderung über eine Funkschnittstelle an den Terminplaner gesendet wird. In diesem Fall findet eine Neubewertung der Situation statt und es wird ggf. sofort ein neuer Terminplan erzeugt. Je nach Ausführungsform werden solche Besprechungsanfragen jedoch nicht sofort in den Terminplan übernommen sondern müssen erst vom Nutzer zur Kenntnis genommen und dann explizit durch dafür vorgesehene Bedienhandlungen in den Terminplan eingeführt werden.

Ferner kann der Nutzer aus eigener Initiative selber neue Termine in den Terminplan hinzufügen. Hierzu ist ihm die Anzeige von freien Zeiträumen zwischen den bereits bestehenden Terminen und Zusatzzeiträumen behilflich.

In einer vorteilhaften Ausführungsform ist vorgesehen, dass der Terminplaner mittels einer Bedienhandlung wenigstens zwischen zwei Betriebsmodi wechselbar ist, wobei in einem ersten Betriebsmodus die Termine und die durch den Routenplan und/oder den Energieauffüllplan bedingten Zusatzzeiträume dargestellt werden und durch eine Bedienhandlung die einem Termin zugeordneten Zeitdaten und/oder ein Zusatzzeitraum zeitlich verschoben wird und wobei in einem zweiten Betriebsmodus die Zusatzzeiträume ausgeblendet werden und durch eine Bedienhandlung die Terminsequenz verändert wird. Der zweite Betriebsmodus entspricht einer einfachen, an sich bekannten Darstellungsweise eines Terminkalenders. Dies ist die bevorzugte Anzeigeform, falls lediglich eine feste Terminsequenz eingesehen werden muss. Ggf. reicht eine solche Anzeigeform auch aus, um die Terminsequenz zu verändern, z.B. zwei Termine gegeneinander auszutauschen, ohne den Nutzer mit zu viel Details visuell zu überfordern oder die Bedienung dadurch in ihrer Komplexität ansteigen zu lassen. Der erste Betriebsmodus gewährt hingegen eine Einsicht in die Feinplanung mit den nötigen Randinformationen und Zusammenhängen zwischen den Terminen und den jeweiligen Zusatzzeiträumen. Hier kann der Nutzer insbesondere auch Ladezeiten manuell verschieben. Dies erweitert seine Handlungsfreiheit.

Die Bedienhandlungen werden nach an sich bekannter Art im Fahrzeug durchgeführt. Sie werden in einer vorteilhaften Ausführungsform durch Bedienhandlungen auf der berührungsempfindlichen Oberfläche eines Touchscreens oder eines Touchpads erfasst. Die Bedienhandlungen können alternativ oder auch zusätzlich mittels einer berührungslosen Gestenbedienung vor der Anzeige des Terminplans erfasst werden.

Wird durch eine Bedienhandlung die Terminsequenz, die einem Termin zugeordneten Zeitdaten und/oder ein durch den Energieauffüllplan bedingter Zusatzzeitraum verändert, so werden die Auswirkungen auf die jeweils anderen Teile des Terminplans, also die nicht explizit geänderten Termine, der Routenplan und der Energieauffüllplan, geprüft. Gegebenfalls wird dann der Routenplan, der Energieauffüllplan und/oder der Terminplan neu erzeugt. Die Anzeige des neu erzeugten Terminplans wird dabei vorzugsweise automatisch aktualisiert.

Vorteilhafterweise ist vorgesehen, dass, falls unter Berücksichtigung von allen Randbedingungen, in deren Abhängigkeit der Terminplan erzeugt wird, ein Zeitkonflikt zwischen Terminen und Zusatzzeiten erkannt wird, eine Warnmeldung ausgegeben wird. Diese Warnmeldung lässt den Nutzer schnell den Zeitkonflikt erkennen. Optional wird dazu eine Vorschlagliste zur Beseitigung des Zeitkonflikts angezeigt. Es erfolgt z.B. der Hinweis, dass einer der Termine zu verschieben ist. Ein Zeitkonflikt kann unter Umständen aber auch anders als durch Terminverschiebung gelöst werden. Wurde beispielsweise ein relativ großer Sicherheitspuffer bei der Zeitplanung und/oder bei der Anforderung für den Minimal-Ladezustand der Batterie vorgegeben, so lässt sich ein Zeitkonflikt ggf. auch auflösen, indem ein solcher Sicherheitspuffer verringert wird. Beispielweise wird ein Aufladevorgang der Batterie des Fahrzeugs schon etwas früher abgebrochen, wenn erkannt wird, dass die ungünstigste angenommene Bedingung mit negativer Auswirkung auf die Leistungsfähigkeit der Batterie oder den zu erwartenden Energieverbrauch, z.B. sehr niedrige Temperaturen oder hohes Verkehrsaufkommen, nicht stattgefunden hat.

Die erfindungsgemäße Vorrichtung zum Bereitstellen eines elektronischen Terminplaners für ein Fahrzeug umfasst eine erste Schnittstelle zu einem Datenspeicher, in dem Daten zu einem geographischen Wegenetz inklusive geographischen Positionen von für das Fahrzeug geeigneten Energieversorgungseinrichtungen gespeichert sind, eine zweite Schnittstelle, über welche Termine, denen Zeitdaten und geographischen Positionen zugeordnet sind, erfassbar sind, und eine dritten Schnittstelle, über welche die zum Antrieb des Fahrzeugs verfügbare Rest-Energiemenge erfassbar ist. Die erfindungsgemäße Vorrichtung umfasst des Weiteren eine mit den Schnittstellen gekoppelte Recheneinheit, mittels derer unter Berücksichtigung von den Zeitdaten und geographischen Positionen der Termine und unter Berücksichtigung der verfügbaren Rest-Energiemenge und des Energieverbrauchs des Fahrzeugs auf einer potentiell zu fahrenden Route ein Routenplan und ein Energieauffüllplan erzeugbar ist, wobei mit den Terminen assoziierte Zusatzzeiträume berechenbar sind, welche sich aufgrund des Routenplans und des Energieauffüllplans ergeben. Die Vorrichtung umfasst ferner eine mit der Recheneinheit gekoppelte Ausgabeeinheit, vorzugsweise eine bedienbare Anzeigefläche, mittels welcher ein von der Recheneinheit erzeugter Terminplan mit den Terminen und den mit den Terminen assoziierten Zusatzzeiträumen ausgebbar ist.

Die erfindungsgemäße Vorrichtung ist insbesondere zum Durchführen des erfindungsgemäßen Verfahrens geeignet. Sie weist somit auch die Vorteile des erfindungsgemäßen Verfahrens auf.

Die erfindungsgemäße Vorrichtung ist insbesondere ein mit einem Fahrzeug fest oder lösbar verbundenes Gerät, vorzugsweise mit einer Schnittstelle zum Synchronisieren des Terminplaners mit einem Master-Terminplaner und/oder zum Empfangen von externen Terminanfragen.

Erfindungsgemäß ist ein Fahrzeug mit einer solchen Vorrichtung gekoppelt, wobei die Rest-Energiemenge des betreffenden Fahrzeugs über die dritte Schnittstelle erfassbar ist. Das Fahrzeug umfasst vorzugsweise einen elektrischen Antrieb. Es ist beispielsweise ein Elektrofahrzeug oder ein sogenanntes Hybrid-Fahrzeug mit einem Elektroantrieb und einem Kraftstoffantrieb.

Die Erfindung wird nun anhand von Ausführungsbeispielen mit Bezug zu den Figuren näher erläutert.
- Figur 1: zeigt ein Elektrofahrzeug, in welchem die Vorrichtung zum Bereitstellen eines Terminplaners gemäß einem Ausführungsbeispiel der Erfindung angeordnet ist,
- Figur 2: zeigt schematisch den Aufbau der erfindungsgemäßen Vorrichtung aus der Figur 1,
- die Figuren 3 und 4: zeigen jeweils einen Terminplan, der gemäß einem Ausführungsbeispiel der Erfindung zwischen zwei Betriebsmodi umschaltbar ist, wobei in einem der Betriebsmodi erfindungsgemäß die freien Zeiträume visualisiert sind, und
- die Figuren 5A - 5L: zeigen Anzeige- und Bedienbeispiele des Terminplaners, die gemäß einem Ausführungsbeispiel der Erfindung erzeugt und durchgeführt wurden.

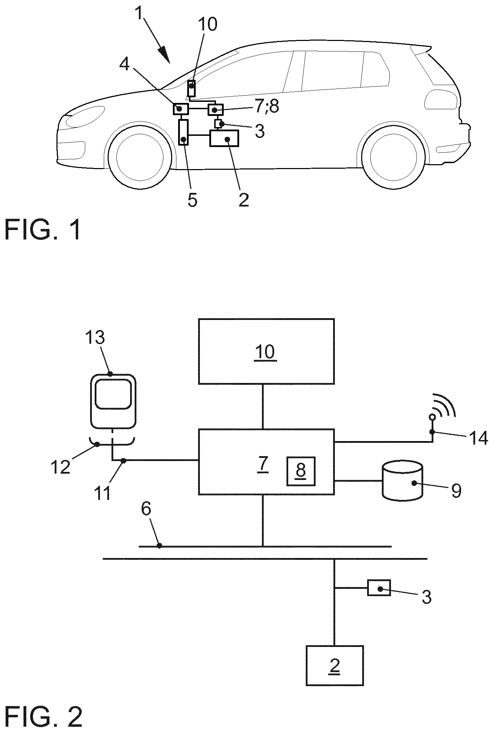

In der Figur 1 ist ein elektrisch angetriebenes Fahrzeug 1 dargestellt, welches mit einer Vorrichtung zum Bereitstellen eines elektronischen Terminplaners gemäß einem Ausführungsbeispiel der Erfindung ausgestattet ist. Das elektrisch angetriebene Fahrzeug 1 ist, wie an sich bekannt, mit einem mit der Batterie 2 verbundenen Elektromotor 5 zum Antrieb des Fahrzeugs 1 und mit einer mit dem Elektromotor 5 verbundenen Motorsteuerung 4 ausgestattet.

Die für den Antrieb des Fahrzeugs 1 verfügbare Rest-Ladungsmenge kann mittels einem mit der Batterie 2 verbundenen Ladungszustandsmesser 3 gemessen werden.

Die im Fahrzeug 1 angeordnete erfindungsgemäße Vorrichtung und deren Anbindung an die Fahrzeug-Dateninfrastruktur ist in größerer Detailtiefe schematisch in der Figur 2 dargestellt. Die erfindungsgemäße Vorrichtung ist gemäß diesem Ausführungsbeispiel in einem fest im Fahrzeug 1 installierten Navigationsgerät oder Fahrerassistenzsystem integriert. Sie umfasst eine Steuereinheit 7 zum Erzeugen und Versenden von Steuerbefehlen und Kommunikationsdaten an peripher angeschlossene Einheiten. In der Steuereinheit 7 ist eine Recheneinheit 8 integriert, mittels derer ein Terminplan berechenbar ist, wie dies im Zusammenhang mit dem erfindungsgemäßen Verfahren noch näher beschrieben wird. Die erfindungsgemäße Vorrichtung umfasst des Weiteren einen von der Steuereinheit 7 ansteuerbaren Touchscreen 10, auf dem Ausgabeinhalte, insbesondere berechnete Terminpläne, angezeigt werden können. Bedienhandlungen vom Nutzer werden auf der berührungsempfindlichen Oberfläche des Touchscreen 10 erfasst und an die Steuereinheit 7 weitergeleitet.

Die erfindungsgemäße Vorrichtung greift ferner mittels der Steuereinheit 7 auf einen Datenspeicher 9 zu, in dem Daten zu einer digitalen Straßenkarte gespeichert sind. Mittels einer Positionierungseinheit, z.B. einem GPS-Modul (GPS = Global Positioning System, nicht dargestellt), kann für das Fahrzeug 1 basierend auf dem aktuellen Standort und der digitalen Straßenkarte nach an sich bekannter Art ein Routenplan berechnet werden. Die digitale Straßenkarte umfasst dazu digital gespeicherte Informationen der geographischen Positionen von Straßen, Städten und markanten Landpunkten, sogenannten Points of Interest (POI). Die POI umfassen insbesondere Ladestationen zum Aufladen der Batterie 2 des Fahrzeugs 1.

Die Steuereinheit 7 ist über den Datenbus 6 im Fahrzeug 1 mit dem Laddungszustandsmesser 3 verbunden und kann damit den Rest-Ladungswert der Batterie 2 erfassen.

Die Steuereinheit 7 kann ferner über eine Funkschnittstelle 14 eine Datenverbindung aufbauen, über die diverse für die Berechnung eines Routenplans und eines Aufladeplans der Batterie 2 relevante Informationen empfangen werden können, wie dies im Zusammenhang mit dem erfindungsgemäßen Verfahren noch näher erläutert wird. Es können z.B. Verkehrsmeldungen, eine Wettervorhersage und Verfügbarkeits-Informationen zu Ladestationen zum Aufladen der Batterie 2 empfangen werden.

Die Steuereinheit 7 ist über eine Datenschnittstelle 11 mit einem externen Datengerät mit Terminkalenderfunktion verbindbar und ggf. synchronisierbar. Die Datenschnittstelle 11 wird über eine Aufnahmeschale 12 zum Aufnehmen des externen Datengeräts, z.B. einem an sich bekannten Mobiltelefon 13 oder einem PDA (Personal Digital Assistant) bereitgestellt. Das Mobiltelefon 13 arbeitet insbesondere nach einem gängigen Mobilfunkstandard, z.B. GSM (Global System for Mobile Communication) oder UMTS (Universal Mobile Telecommunication System). Durch Einlegen des Mobiltelefons 13 in die Aufnahmeschale 12 kann eine Datenverbindung zwischen dem Mobiltelefon 13 und der Steuereinheit 7 hergestellt werden, sodass die den einzelnen Terminen zugeordnete Zeitdaten und geographische Positionen an die Recheneinheit 8 übermittelt und dort weiterverarbeitet werden können. Alternativ oder auch zusätzlich kann die Steuereinheit 7 zu diesem Zweck auch über eine Nahfeld-Funkschnittstelle wie z.B. eine Infrarotschnittstelle oder Bluetooth mit dem Mobiltelefon 13 eine Datenverbindung aufbauen (nicht dargestellt). Das Mobiltelefon 13 kann dabei von anderen Mobilfunkteilnehmern (nicht dargestellt) weitere Terminanfragen erhalten, die ggf. bei der Erstellung des Terminplans, z.B. als Terminanfragen, berücksichtigt werden.

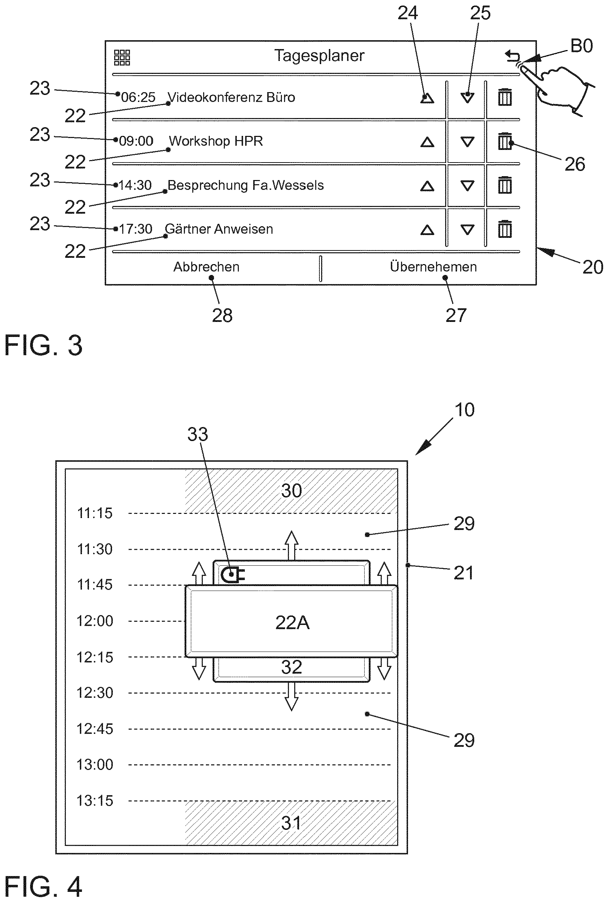

Das erfindungsgemäße Verfahren wird nun anhand eines Ausführungsbeispiels und mit Bezug zu den Figuren 3, 4 sowie 5A - 5L näher erläutert. Zur Ausführung des erfindungsgemäßen Verfahrens kann die zuvor beschriebene erfindungsgemäße Vorrichtung verwendet werden, auf die sich auch im Folgenden ausdrücklich bezogen wird.

Als Ausgangssituation wurden von der Recheneinheit 8 folgende Daten erfasst: Erstens die Termine des Terminkalenders des Mobiltelefons 13, welches dem Fahrer des Fahrzeugs 1 gehört, wobei auch der aktuelle Zeitpunkt inklusive Wochentag und Jahreszeit ermittelt wird, um daraus erste Implikationen für die wahrscheinliche Verkehrslage und die Beleuchtungsanforderungen ableiten zu können; zweitens die geographischen Positionen, die den Terminen des Terminkalenders zugeordnet sind; drittens die zum Antrieb des Fahrzeugs 1 verfügbare Rest-Ladungsmenge der Batterie 2; viertens die Daten zu der digitalen Straßenkarte und geeigneten Ladestationen zum Aufladen der Batterie 2; und fünftens -jeweils für den geographischen Bereich, in welchem die den Terminen aus dem Terminkalender zugeordneten Orte liegen - die Verfügbarkeitsdaten und spezifischen Parameter der Ladestationen, der Verkehrslagebericht sowie die Wettervorhersage. Diese Daten werden regelmäßig aktualisiert.

Unter Berücksichtigung dieser Daten werden zunächst in der Recheneinheit 8 potentiell zu fahrende Routen analysiert. Aus dem prognostizierten Energieverbrauch, falls die jeweilige Route unter den gegebenen Bedingungen gefahren würde, wird die voraussichtlich dann noch verfügbare Rest-Energiemenge, die sich durch die Routenwahl und den Energieverbrauch ergeben würde, berechnet. Dabei wird die zeitliche Verfügbarkeit und Ladeleistung der in Frage kommenden Ladestationen, insbesondere den Ladestationen in der Nähe der den Terminen zugeordneten Orte, berücksichtigt. Basierend auf den möglichen Routen wird dann ein Routenplan und ein Aufladeplan ausgewählt, der für den Fahrer möglichst günstig ist. Es werden beispielsweise die Zeiten so optimiert, dass zwischen zwei Terminen abzüglich eines Zeitpuffers keine zusätzlichen, unnötigen Leerzeiten für den Fahrer entstehen, sodass bei einem nicht voll ausgebuchten Terminplan die nicht verplante freie Zeit für potentiell weitere Termine in einem zusammenhängenden Zeitkorridor konsolidiert wird. Zu diesem Zweck kann der Fahrer optional seine Präferenzen angeben, z.B. in welcher Weise ein Zeitpuffer zwischen zwei Terminen möglichst zu berücksichtigen ist

Aufgrund des so ausgewählten Routenplans und Energieauffüllplans ergeben sich mit den Terminen assoziierte Zusatzzeiträume wie Fahrzeiten zwischen zwei Terminen sowie Aufladezeiten zum Aufladen der Batterie 2. Diese können dabei vorzugsweise so gewählt werden, dass die Batterie 2 während eines Termins aufgeladen wird, woraus sich dann allerdings noch Wegezeiten ergeben, z.B. die Zeit für den Fußweg von der Ladestation zum Ort des wahrzunehmenden Termins. Mittels der Steuereinheit 7 werden dann die Graphikdaten für den Tagesterminplan erzeugt.

Dem Fahrer wird in einem Übersichts-Betriebmodus auf dem Touchscreen 10 eines fest im Fahrzeug 1 verbauten Navigationsgeräts der Terminplan 20 angezeigt (Figur 3). Alternativ kann auch die Anzeigefläche des vom Fahrer mitgebrachten Mobiltelefons 13 in der Aufnahmeschale 12 für das Ausgeben der Anzeigeinhalte verwendet werden. Im ersten Betriebsmodus wird die Terminsequenz der einzelnen Termine 22 mit den jeweiligen Startzeiten 23 in einer graphischen Liste dargestellt. Durch Antippen der Schaltflächen 24, 25 kann die Terminsequenz verändert werden, indem der in der betreffenden Zeile eingetragene Termin 23 in der Reihenfolge nach oben bzw. nach unten verschoben wird. Nach einer solchen Bedienhandlung werden in der Recheneinheit 8 die Auswirkungen auf den Routenplan, den Energieauffüllplan und/oder den Terminplan 20 geprüft und ggf. ein aktualisierter Terminplan 20 erzeugt (nicht dargestellt). Der Terminplan 20 im ersten Betriebsmodus zeigt außerdem an sich bekannte weitere Schaltflächen 26 - 28 zum Löschen einzelner Termine 22, zum Abbrechen eines Bedienvorgangs und zum Übernehmen von zuvor eingegebenen Änderungen.

Der Fahrer kann durch das Ausführen der Bedienhandlung B0, indem er den Touchscreen 10 an der Schaltfläche ganz oben rechts berührt, den Terminplaner in einen Detail-Bedienmodus wechseln. In diesem Betriebsmodus wird der Terminplan 21 mit den Terminen 22 und den damit assoziierten Zusatzzeiträumen 30, 31, 32 angezeigt (Figur 4). Freie Zeiträume 29 um den Termin 22A und die Zusatzzeiträume 30, 31, 32 werden dem Fahrer als terminplanerischer Freiheitsgrad visualisiert, wobei der Fahrer die Zeitleiste durch einen Bildlauf (nicht dargestellt) nach an sich bekannter Art durchlaufen kann, um frühere oder spätere Termine 22 zur Anzeige zu bringen. Der Wechsel vom Detail-Betriebsmodus zurück in den Übersichts-Betriebsmodus erfolgt entweder automatisch, z.B. nach Auflauf einer Zeitspanne, in welcher keine weitere Bedienhandlung erfasst wurde, oder wiederum durch Berühren des Touchscreens 10 an der rechten oberen Ecke (nicht dargestellt).

Der Fahrer erhält im Detail-Betriebsmodus nicht nur eine sehr leicht verständliche Visualisierung der freien Zeiträume 29, sondern zudem einen Überblick über die Zusammenhänge der Zusatzzeiten 30, 31, 32 mit dem Termin 22A. In diesem Betriebmodus kann er insbesondere einen bestehenden Termin verändern oder einen neuen Termin hinzufügen.

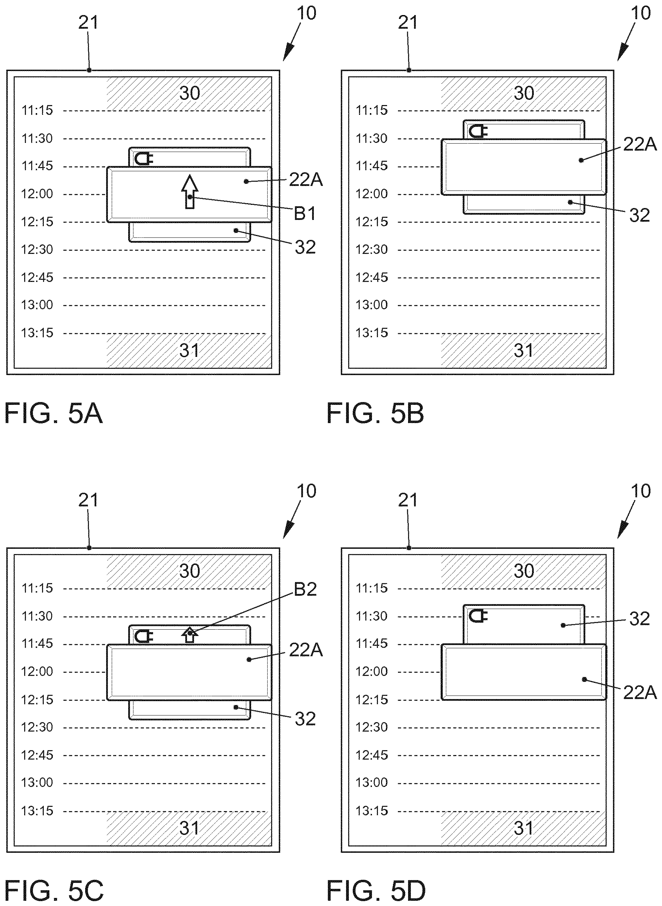

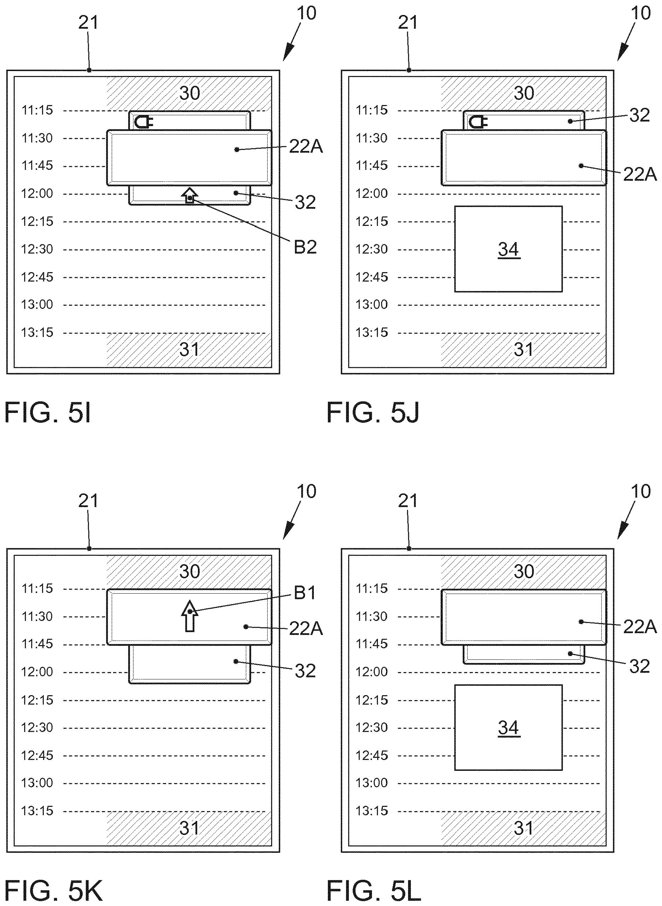

Für den Termin 22A wird eine vorherigere Terminbegrenzung 30 und eine nachfolgende Terminbegrenzung 31 dargestellt. Diese Terminbegrenzungen 30, 31 bedingen sich aus der Dauer des vorherigen bzw. nachfolgenden Termins 22 sowie aus dazugehörigen Reisezeiten. Des Weiteren wird die Aufladezeit 32 und ein Aufladesymbol 33 angezeigt. Durch verschiedene Bedienhandlungen B1 - B4 kann der Fahrer nun den Termin 22A sowie den Zeitpunkt der Ladezeit manipulieren, wie dies im Folgenden mit Bezug zu den Figuren 5A - 5L näher erläutert wird. Die Bedienhandlungen B1, B2 werden als Ziehgesten mit einem oder mehreren Fingern in dieselbe Richtung und die Bedienhandlungen B3, B4 als Ziehgesten mehrerer Finger in entgegengesetzte Richtung auf dem Touchscreen 10 ausgeführt.

Gemäß der Figur 5A wird der Termin 22A durch die nach oben gerichtete Ziehgeste B1 auf dem Anzeigebereich des Termins 22A zeitlich nach vorne geschoben. Der Termin 22A und daran gekoppelte Aufladezeit 32 lässt sich nur bis zur Terminbegrenzung 30 verschieben (Figur 5B). Ein weiteres Verschieben wird zunächst gehemmt. Der zum Terminplan 21 gehörige Routenplan und Aufladeplan werden entsprechend neu berechnet und ggf. wird eine geeignete Ladestation über die Funkschnittstelle 14 gebucht bzw. eine bereits erfolgte Buchung aktualisiert.

Gemäß der Figur 5C wird die Aufladezeit 32 relativ zum festen Termin 22A durch die nach oben gerichtete Ziehgeste B2 auf dem Anzeigebereich der Aufladezeit 32 zeitlich nach vorne geschoben. Die Aufladezeit 32 lässt sich nur soweit verschieben, dass das Ende des Aufladevorgangs nicht vor dem Ende des Termins 22A liegt (Figur 5D). Durch die Bedienhandlung B2 wird die Nutzerintention erkannt, dass der Fahrer sofort nach dem Ende des Termins 22A mit voll aufgeladener Batterie 2 weiterfahren möchte. Ein weiteres Verschieben wird gehemmt, weil dies unnötigerweise mehr Zeit vor dem Termin 22A binden würde. Der zum Terminplan 21 gehörige Routenplan und Aufladeplan werden entsprechend neu berechnet und ggf. wird eine geeignete Ladestation über die Funkschnittstelle 14 gebucht bzw. eine bereits erfolgte Buchung aktualisiert.

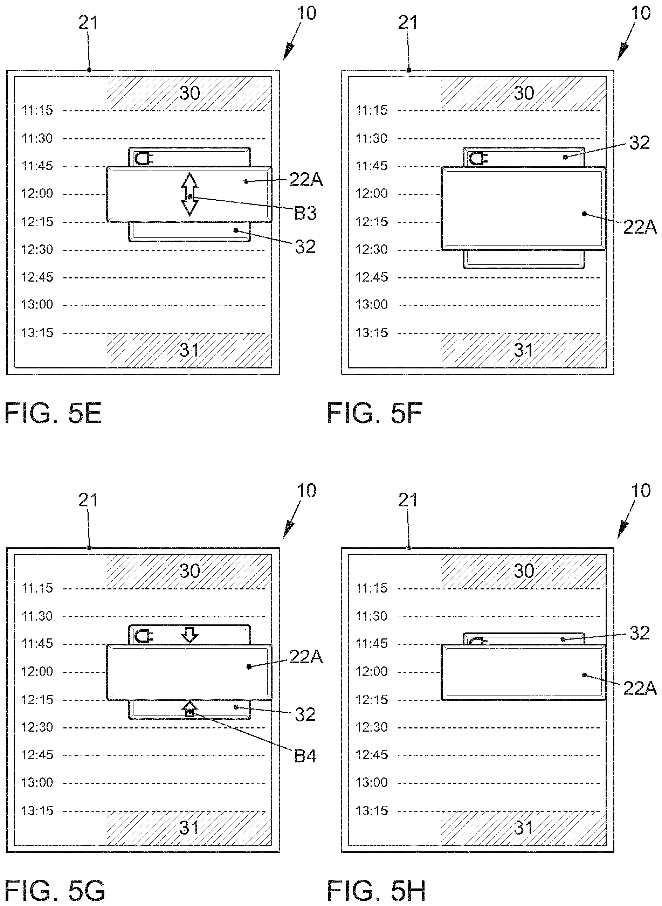

Gemäß der Figur 5E wird der Termin 22A durch eine Spreizgeste B3 auf dem Anzeigebereich des Termins 22A zeitlich verlängert. Die daran gekoppelte Aufladezeit 32 bleibt hiervon zunächst unberührt (Figur 5F). Mit der Bedienhandlung B3 wird die Nutzerintention erkannt, dass der Fahrer den Termin 22A verlängern will. Der zum Terminplan 21 gehörige Routenplan wird entsprechend neu berechnet. Ferner wird berechnet, ob sich Auswirkungen oder Optimierungsmöglichkeiten bzgl. des Aufladeplans ergeben. Für den Fall, dass der Fahrer nach dem Termin 22A mit voll aufgeladener Batterie 2 starten möchte, kann es sein, dass bei einem verlängerten Termin 22A der Aufladebeginn zeitlich nach hinten verschoben werden kann, woraus sich vor dem Termin 22A ein freier Zeitraum 29 ergeben oder dieser vergrößert werden kann. Ggf. wird eine geeignete Ladestation über die Funkschnittstelle 14 gebucht bzw. eine bereits erfolgte Buchung aktualisiert.

Gemäß der Figur 5G wird die Aufladezeit 32 durch die Zuziehgeste B4 auf dem Anzeigebereich der Aufladezeit 32 verkürzt. Der Beginn der Aufladezeit 32 lässt sich zeitlich nur soweit nach hinten verschieben, dass der Beginn des Aufladevorgangs noch soviel vor dem Beginn des Termins 22A liegt, dass durch weitere Zusatzzeiten wie dem Fußweg von der Ladestation zum Termin 22A dieser in jedem Fall noch rechtzeitig erreicht wird (Figur 5H). Durch die Bedienhandlung B4 wird die Nutzerintention erkannt, dass der Fahrer die Batterie 2 möglichst schnell aufgeladen haben möchte. Der zum Terminplan 21 gehörige Aufladeplan wird entsprechend neu berechnet und ggf. wird eine geeignete Ladestation über die Funkschnittstelle 14 gebucht bzw. eine bereits erfolgte Buchung aktualisiert.

Aus der verkürzten Aufladezeit gemäß der in den Figuren 5G, 5H dargestellten Situation kann sich die Notwendigkeit ergeben, dass eine Ladestation mit einer höheren Ladekapazität gebucht werden muss. In einer ähnlichen Situation in der Figur 5I möchte der Fahrer den Aufladezeitraum zeitlich nach vorne schieben, wird allerdings durch die vorherige Terminbegrenzung 30 blockiert. Dem Fahrer wird daraufhin in beiden Fällen ein Hinweisfeld 34 angezeigt, wie dies in der Figur 5J dargestellt ist. Über dieses Hinweisfeld 34 wird der Fahrer auf den Zeitkonflikt und/oder die nötige Änderung aufmerksam gemacht und es werden ihm eine Vorschlagliste angezeigt, wie das Problem gelöst werden kann. Der Fahrer hat nun die Wahl, eine Ladestation mit einer höheren Ladekapazität und ggf. damit verbundenen höheren Aufladekosten zu buchen, oder alternativ einen längeren Aufladezeitraum oder eine geringer aufgeladene Batterie 2 zu akzeptieren. Eine weitere Möglichkeit wäre, dass durch eine Routenneuberechnung eine schnelle Route zwischen dem Termin 22A und dem vorherigen oder nachfolgenden Termin 22 berechenbar ist. Hierbei sind die Auswirkungen auf andere vom Fahrer gemachte Vorgaben, z.B. Kosten oder Energieverbrauch, von der Recheneinheit 8 zu prüfen. Auch ein solches Ergebnis kann in einem Hinweisfeld 34 ausgegeben werden.

Gemäß der Figur 5K wird der Termin 22A analog der Situation in der Figur 5A durch die nach oben gerichtete Ziehgeste B1 auf dem Anzeigebereich des Termins 22A zeitlich nach vorne geschoben. Versucht der Fahrer nun, den Termin zeitlich noch weiter nach vorne zu schieben, so wird ihm zunächst das Hinweisfeld 34 angezeigt, welches ihn auf den Terminkonflikt aufmerksam macht (Figur 5K). Dabei werden in der Recheneinheit 8 alternative Terminpläne untersucht, bei denen z.B. eine schnellere Route zwischen dem Ort des vorherigen Termins zum Ort des Termins 22A und Veränderungen von vorab eingestellten Zeitpuffern berücksichtigt werden. Bei erneutem Durchführen der Bedienhandlung B1 wird daraufhin der Termin 22A um einige Minuten vorverschoben und dem Fahrer im Hinweisfeld 34 mitgeteilt, dass eine schnellere Navigationsroute mit höherem Energieverbrauch gewählt wurde, ein Zeitpuffer reduziert oder gelöscht wurde und/oder der vorherige Termin ggf. vorzuverlegen oder zu verkürzen ist.

### Bezugszeichenliste

- 1: Elektrofahrzeug
- 2: Batterie
- 3: Ladungszustandsmesser
- 4: Motorsteuerung
- 5: Elektromotor
- 6: Datenbus
- 7: Steuereinheit
- 8: Recheneinheit
- 9: Datenspeicher
- 10: Touchscreen
- 11: Datenschnittstelle
- 12: Aufnahmeschale
- 13: Mobiltelefon
- 14: Funkschnittstelle
- 20, 21: Terminpläne
- 22, 22A: Termine
- 23: Zeitdaten
- 24 - 28: Schaltflächen
- 29: freier Zeitraum
- 30, 31: Terminbegrenzungen
- 32: Aufladezeit
- 33: Aufladesymbol
- 34: Hinweisfeld
- B0 - B4: Bedienaktionen

## Patentansprüche

1. Verfahren zum Bereitstellen eines elektronischen Terminplaners für ein Fahrzeug (1), bei dem
- Termine (22), denen Zeitdaten (23) und geographische Positionen zugeordnet sind, erfasst werden,
- die zum Antrieb des Fahrzeugs (1) verfügbare Rest-Energiemenge erfasst wird,
- Daten zu einem geographischen Wegenetz, inklusive geographischen Positionen von für das Fahrzeug (1) geeigneten Energieversorgungseinrichtungen, erfasst werden,
- unter Berücksichtigung der Zeitdaten (23) und geographischen Positionen, die den Terminen (22) zugeordnet sind, und unter Berücksichtigung der verfügbaren Rest-Energiemenge und des Energieverbrauchs des Fahrzeugs (1) auf einer potentiell zu fahrenden Route ein Routenplan und ein Energieauffüllplan erzeugt werden, wobei mit den Terminen (22) assoziierte Zusatzzeiträume (30, 31, 32) berechnet werden, welche sich aufgrund des Routenplans und des Energieauffüllplans ergeben, und
- ein Terminplan (20, 21) mit den Terminen (22) und den mit den Terminen (22) assoziierten Zusatzzeiträumen (30, 31, 32) erzeugt und ausgegeben wird,
**dadurch gekennzeichnet, dass**
- der erzeugte Terminplan (20, 21) mit den Terminen (22) und den assoziierten Zusatzzeiträumen (30, 31, 32) im Fahrzeug (1) angezeigt wird, wobei freie Zeiträume (29) zwischen der Menge der Termine (22) und der Zusatzzeiträume (30, 31, 32) als terminplanerischer Freiheitsgrad visualisiert werden, und
- durch eine Bedienhandlung (24, 25, 26, B1 - B4) die Terminsequenz, die einem Termin (22) zugeordneten Zeitdaten (23) und/oder ein durch den Energieauffüllplan bedingter Zusatzzeitraum (32) verändert und der Routenplan, der Energieauffüllplan und/oder der Terminplan (20, 21) neu erzeugt wird.

2. Verfahren nach Anspruch 1,
**dadurch gekennzeichnet,**
**dass** das Fahrzeug (1) elektrisch antreibbar ist und die geeigneten Energieversorgungseinrichtungen elektrische Ladestellen umfassen.

3. Verfahren nach Anspruch 2,
**dadurch gekennzeichnet,**
**dass** Eigenschaften der Ladestellen, insbesondere deren zeitliche Verfügbarkeit und Ladeleistung, erfasst werden und bei der Erzeugung des Terminplans (20, 21) berücksichtigt werden.

4. Verfahren nach einem der vorangegangenen Ansprüche,
wobei die Zusatzzeiträume (30, 31, 32) umfassen:
- Reisezeiten zwischen zwei Terminen (22) unterschiedlicher geographischer Position,
- Wegezeiten zwischen einer Ladestation und einer einem Termin zugeordneten geographischen Position,
- Wartezeiten an einer Energieversorgungseinrichtung, insbesondere an einer Ladestation, und/oder
- Energieauffüllzeiten, insbesondere Ladezeiten (32), an einer Energieversorgungseinrichtung.

5. Verfahren nach einem der vorangegangenen Ansprüche,
**dadurch gekennzeichnet,**
**dass** der Routenplan und/oder der Energieauffüllplan erzeugt wird in Abhängigkeit von der Topographie des geographischen Wegenetzes, dem Verkehr, der Tageszeit, dem Wochentag, der Jahreszeit, den Wetterbedingungen, dem routenspezifischen Energieverbrauch, den Kosten, der Verfügbarkeit der Energieversorgungseinrichtung und/oder der Rest-Energiemenge.

6. Verfahren nach einem der vorangegangenen Ansprüche,
**dadurch gekennzeichnet, dass**
- der Terminplaner mittels einer Bedienhandlung (B0) wenigstens zwischen zwei Betriebsmodi wechselbar ist,
- wobei in einem ersten Betriebsmodus (21) die Termine (22) und die durch den Routenplan und/oder den Energieauffüllplan bedingten Zusatzzeiträume (30, 31, 32) dargestellt werden und durch eine Bedienhandlung (B1 - B4) die einem Termin (22) zugeordneten Zeitdaten (23) und/oder ein Zusatzzeitraum (32) zeitlich verschoben wird und
- in einem zweiten Betriebsmodus (20) die Zusatzzeiträume (30, 31, 32) ausgeblendet werden und durch eine Bedienhandlung (24, 25, 26) die Terminsequenz verändert wird.

7. Verfahren nach einem der vorangegangenen Ansprüche,
**dadurch gekennzeichnet, dass**, falls unter Berücksichtigung von allen Randbedingungen, in deren Abhängigkeit der Terminplan (20, 21) erzeugt wird, ein Zeitkonflikt zwischen Terminen (22) und Zusatzzeiten (30, 31, 32) erkannt wird, eine Warnmeldung (34) ausgegeben wird und optional eine Vorschlagliste zur Beseitigung des Zeitkonflikts angezeigt wird.

8. Vorrichtung zum Bereitstellen eines elektronischen Terminplaners für ein Fahrzeug (1), mit
- einer ersten Schnittstelle zu einem Datenspeicher (9), in dem Daten zu einem geographischen Wegenetz inklusive geographischen Positionen von für das Fahrzeug (1) geeigneten Energieversorgungseinrichtungen gespeichert sind,
- einer zweiten Schnittstelle (11), über welche Termine (22), denen Zeitdaten (23) und geographische Positionen zugeordnet sind, erfassbar sind,
- einer dritten Schnittstelle (9, 3), über welche die zum Antrieb des Fahrzeugs (1) verfügbare Rest-Energiemenge erfassbar ist,
- einer mit den Schnittstellen gekoppelten Recheneinheit (8), mittels derer unter Berücksichtigung von den Zeitdaten (23) und geographischen Positionen der Termine (22) und unter Berücksichtigung der verfügbaren Rest-Energiemenge und des Energieverbrauchs des Fahrzeugs (1) auf einer potentiell zu fahrenden Route ein Routenplan und ein Energieauffüllplan erzeugbar ist, wobei mit den Terminen (22) assoziierte Zusatzzeiträume (30, 31, 32) berechenbar sind, welche sich aufgrund des Routenplans und des Energieauffüllplans ergeben, und
- mittels einer mit der Recheneinheit (8) gekoppelten Ausgabeeinheit (10) ein von der Recheneinheit (8) erzeugter Terminplan (20, 21) mit den Terminen (22) und den mit den Terminen (22) assoziierten Zusatzzeiträumen (30, 31, 32) ausgebbar ist,
**gekennzeichnet dadurch, dass**
der erzeugte Terminplan (20,21) mit den Terminen (22) und den assoziierten Zusatzzeiträumen (30,31,32) im Fahrzeug (1) anzeigbar ist, wobei freie Zeiträume (29) zwischen der Menge der Termine (22) und der Zusatzzeiträume (30,31,32) als terminplanerischer Freiheitsgrad visualisierbar sind, und
durch eine Bedienhandlung (24, 25, 26, B1 - B4) die Terminsequenz, die einem Termin (22) zugeordneten Zeitdaten (23) und/oder ein durch den Energieauffüllplan bedingter Zusatzzeitraum (32) veränderbar sind und der Routenplan, der Energieauffüllplan und/oder der Terminplan (20, 21) neu von der Recheneinheit (8) erzeugbar sind.

## Claims

1. Method for providing an electronic personal organizer for a vehicle (1), in which
- appointments (22) which are assigned time data (23) and geographical positions are captured,
- the remaining amount of energy available to drive the vehicle (1) is captured,
- data relating to a geographical road network, including geographical positions of energy supply devices suitable for the vehicle (1), are captured,
- a route plan and an energy filling plan are generated taking into account the time data (23) and geographical positions assigned to the appointments (22) and taking into account the remaining amount of available energy and the energy consumption of the vehicle (1) on a route to be potentially travelled, additional periods (30, 31, 32) which are associated with the appointments (22) and result from the route plan and the energy filling plan being calculated, and
- a schedule (20, 21) containing the appointments (22) and the additional periods (30, 31, 32) associated with the appointments (22) is generated and output,
**characterized in that**
- the generated schedule (20, 21) containing the appointments (22) and the associated additional periods (30, 31, 32) is displayed in the vehicle (1), free periods (29) between the set of appointments (22) and the additional periods (30, 31, 32) being visualized as a degree of freedom in terms of the personal organizer, and
- the appointment sequence, the time data (23) assigned to an appointment (22) and/or an additional period (32) caused by the energy filling plan is/are changed by means of an operating action (24, 25, 26, B1-B4) and the route plan, the energy filling plan and/or the schedule (20, 21) is/are newly generated.

2. Method according to Claim 1,
**characterized**
**in that** the vehicle (1) can be electrically driven and the suitable energy supply devices comprise electrical charging locations.

3. Method according to Claim 2,
**characterized**
**in that** properties of the charging locations, in particular their temporal availability and charging capacity, are captured and are taken into account when generating the schedule (20, 21).

4. Method according to one of the preceding claims, the additional periods (30, 31, 32) comprising:
- journey times between two appointments (22) at different geographical positions,
- transit times between a charging station and a geographical position assigned to an appointment,
- waiting times at an energy supply device, in particular at a charging station, and/or
- energy filling times, in particular charging times (32), at an energy supply device.

5. Method according to one of the preceding claims, **characterized**
**in that** the route plan and/or the energy filling plan is/are generated on the basis of the topography of the geographical road network, the traffic, the time of day, the day of the week, the season, the weather conditions, the route-specific energy consumption, the costs, the availability of the energy supply device and/or the remaining amount of energy.

6. Method according to one of the preceding claims, **characterized in that**
- the personal organizer can be changed at least between two operating modes by means of an operating action (B0),
- the appointments (22) and the additional periods (30, 31, 32) caused by the route plan and/or the energy filling plan being displayed in a first operating mode (21) and the time data (23) assigned to an appointment (22) and/or an additional period (32) being temporally shifted by means of an operating action (B1-B4), and
- the additional periods (30, 31, 32) being hidden in a second operating mode (20) and the appointment sequence being changed by means of an operating action (24, 25, 26).

7. Method according to one of the preceding claims, **characterized**
**in that**, if a time conflict between appointments (22) and additional times (30, 31, 32) is identified taking into account all boundary conditions, on the basis of which the schedule (20, 21) is generated, a warning message (34) is output and a list of suggestions for eliminating the time conflict is optionally displayed.

8. Apparatus for providing an electronic personal organizer for a vehicle (1), having
- a first interface to a data memory (9) which stores data relating to a geographical road network, including geographical positions of energy supply devices suitable for the vehicle (1),
- a second interface (11) which can be used to capture appointments (22) which are assigned time data (23) and geographical positions,
- a third interface (9, 3) which can be used to capture the remaining amount of energy available to drive the vehicle (1),
- a computing unit (8) which is coupled to the interfaces and can be used to generate a route plan and an energy filling plan taking into account the time data (23) and geographical positions of the appointments (22) and taking into account the remaining amount of available energy and the energy consumption of the vehicle (1) on a route to be potentially travelled, additional periods (30, 31, 32) which are associated with the appointments (22) and result from the route plan and the energy filling plan being able to be calculated, and
- a schedule (20, 21) which is generated by the computing unit (8) and contains the appointments (22) and the additional periods (30, 31, 32) associated with the appointments (22) being able to be output by means of an output unit (10) coupled to the computing unit (8),
**characterized in that**
the generated schedule (20, 21) containing the appointments (22) and the associated additional periods (30, 31, 32) can be displayed in the vehicle (1), free periods (29) between the set of appointments (22) and the additional periods (30, 31, 32) being able to be visualized as a degree of freedom in terms of the personal organizer, and the appointment sequence, the time data (23) assigned to an appointment (22) and/or an additional period (32) caused by the energy filling plan can be changed by means of an operating action (24, 25, 26, B1-B4) and the route plan, the energy filling plan and/or the schedule (20, 21) can be newly generated by the computing unit (8).

## Revendications

1. Procédé permettant de créer un planificateur électronique de points de rendez-vous pour un véhicule (1), dans lequel
- des points de rendez-vous (22) auxquels sont associées des données temporelles (23) et des positions géographiques sont détectés,
- la quantité d'énergie résiduelle disponible pour propulser le véhicule (1) est détectée,
- des données concernant un réseau de voies géographiques, y compris les positions géographiques de dispositifs d'alimentation en énergie appropriés pour le véhicule (1) sont détectées,
- en tenant compte des données temporelles (23) et des positions géographiques associées aux points de rendez-vous (22) et en tenant compte de la quantité d'énergie résiduelle disponible et de la consommation d'énergie du véhicule (1) sur un trajet potentiel à parcourir, un plan d'itinéraire et un plan de remplissage en énergie sont générés, dans lequel des intervalles de temps additionnels (30, 31, 32) associés aux points de rendez-vous (22) sont calculés, ces intervalles de temps additionnels découlant du plan d'itinéraire et du plan de remplissage en énergie, et
- un plan de points de rendez-vous (20, 21), avec les points de rendez-vous (22) et les intervalles de temps additionnels (30, 31, 32) associés aux points de rendez-vous (22), est généré et fourni en sortie,
**caractérisé en ce que**
- le plan de points de rendez-vous (20, 21) généré avec les points de rendez-vous (22) et les intervalles de temps additionnels (30, 31, 32) associés est affiché dans le véhicule (1), dans lequel des intervalles de temps libres (29) entre les valeurs des points de rendez-vous (22) et des intervalles de temps additionnels (30, 31, 32) sont visualisés sous la forme d'un degré de liberté propre au planificateur de points de rendez-vous, et
- la séquence de points de rendez-vous qui modifie les données temporelles (23) associées à un point de rendez-vous (22) et/ou qui modifie un intervalle de temps additionnel (32) conditionné par le plan de remplissage en énergie, et le plan d'itinéraire, le plan de remplissage en énergie et/ou le plan de points de rendez-vous (20, 21) sont de nouveau générés par une opération de commande (24, 25, 26, B1 - B4).

2. Procédé selon la revendication 1,
**caractérisé en ce que** le véhicule (1) est propulsé électriquement et **en ce que** les dispositifs d'alimentation en énergie appropriés comprennent des points de recharge électrique.

3. Procédé selon la revendication 2,
**caractérisé en ce que** des propriétés des points de recharge, notamment leur disponibilité dans le temps et leur puissance de charge, sont détectées et sont prises en compte lorsque le plan de points de rendez-vous (20, 21) est généré.

4. Procédé selon l'une quelconque des revendications précédentes,
dans lequel les intervalles de temps additionnels (30, 31, 32) comprennent :
- des temps de voyage entre deux points de rendez-vous (22) ayant des positions géographiques différentes,
- des temps de trajet entre une station de recharge et une position géographique associée à un point de rendez-vous,
- des temps d'attente à l'emplacement d'un dispositif d'alimentation en énergie, notamment à l'emplacement d'une station de recharge, et/ou
- des temps de réalisation de remplissage en énergie, notamment des temps de charge (32), à l'emplacement d'un dispositif d'alimentation en énergie.

5. Procédé selon l'une quelconque des revendications précédentes,
**caractérisé en ce que** le plan d'itinéraire et/ou le plan de remplissage en énergie est/sont généré(s) en fonction de la topographie du réseau de voies géographiques, de la circulation, de l'heure du jour, du jour de la semaine, de la saison, des conditions météorologiques, de la consommation d'énergie propre à l'itinéraire, des coûts, de la disponibilité du dispositif d'alimentation en énergie et/ou de la quantité d'énergie résiduelle.

6. Procédé selon l'une quelconque des revendications précédentes,
**caractérisé en ce que**
- le planificateur électronique de points de rendez-vous peut être amené à basculer entre au moins deux modes de fonctionnement au moyen d'une manipulation de commande (B0),
- dans lequel, dans un premier mode de fonctionnement (21), les points de rendez-vous (22) et les intervalles de temps additionnels (30, 31, 32) nécessités par le plan d'itinéraire et/ou le plan de remplissage en énergie sont représentés et des données temporelles (23) associées à un point de rendez-vous (22) et/ou un intervalle de temps additionnel (32) est décalé dans le temps par une manipulation de commande (B1-B4), et
- dans un deuxième mode de fonctionnement (20), les intervalles de temps additionnels (30, 31, 32) sont fusionnés et la séquence de points de rendez-vous est modifiée par une manipulation de commande (24, 25, 26).

7. Procédé selon l'une quelconque des revendications précédentes,
**caractérisé en ce que**, dans le cas où un conflit de temps entre des points de rendez-vous (22) et des temps additionnels (30, 31, 32) est détecté lorsqu'il est tenu compte de toutes les conditions marginales en fonction desquelles le plan de points de rendez-vous (20, 21) est généré, un message d'alarme (34) est délivré et une liste de propositions est facultativement affichée pour résoudre le conflit de temps.

8. Dispositif permettant de créer un planificateur électronique de points de rendez-vous pour un véhicule (1), comportant :
- une première interface comportant une mémoire de données (9) dans laquelle sont stockées des données concernant un réseau de voies géographiques, y compris les positions géographiques de dispositifs d'alimentation en énergie appropriés pour le véhicule (1),
- une deuxième interface (11) permettant de détecter des points de rendez-vous (22) auxquels sont associées des données temporelles (23) et des positions géographiques,
- une troisième interface (9, 3) permettant de détecter la quantité d'énergie résiduelle disponible pour la propulsion du véhicule (1),
- une unité de calcul (8) couplée aux interfaces, au moyen de laquelle, en tenant compte des données temporelles (23) et des positions géographiques des points de rendez-vous (22) et en tenant compte de la quantité d'énergie résiduelle disponible et de la consommation d'énergie du véhicule (1) sur un trajet potentiel à parcourir, un plan d'itinéraire et un plan de remplissage en énergie peuvent être générés, dans lequel des intervalles de temps additionnels (30, 31, 32) associés aux points de rendez-vous (22) peuvent être calculés, ces intervalles de temps additionnels découlant du plan d'itinéraire et du plan de remplissage en énergie, et
- au moyen d'une unité de sortie (10) couplée à l'unité de calcul (8), un plan de points de rendez-vous (20, 21) généré par l'unité de calcul (8) avec les points de rendez-vous (22) et les intervalles de temps additionnels (30, 31, 32) associés aux points de rendez-vous (22), peut être fourni en sortie, **caractérisé en ce que** le plan de points de rendez-vous (20, 21) généré avec les points de rendez-vous (22) et les intervalles de temps additionnels associés (30, 31, 32) peuvent être affichés dans le véhicule (1), dans lequel les intervalles de temps libres (29) entre les valeurs des points de rendez-vous (22) et les intervalles de temps additionnels (30, 31, 32) peuvent être visualisés sous la forme d'un degré de liberté propre au planificateur de points de rendez-vous, et
- la séquence de points de rendez-vous, les données temporelles (23) associées à un point rendez-vous (22) et/ou un intervalle de temps additionnel (32) conditionné par le plan de remplissage en énergie peuvent être modifiés et le plan d'itinéraire, le plan de remplissage en énergie et/ou le plan de points de rendez-vous (20, 21) peuvent de nouveau générés par l'unité de calcul (8) par l'intermédiaire d'une manipulation de commande (24, 25, 26, B1-B4).
